# EUROPEAN PATENT SPECIFICATION

(11) **EP 1 693 420 B1**
(45) Date of publication and mention of the grant of the patent: **04.06.2014**
(21) Application number: 05100540.3
(22) Date of filing: 27.01.2005
(51) Int. Cl.: C08L 83/04, C08L 75/04, C08L 71/00, C08L 33/08, C08L 33/10, C08L 33/12, C08L 25/10, A61B 5/117, B29C 33/40

(54) **Kit comprising a clear polymeric material for the registration of fingerprints**
Kit enthaltend ein transparentes Polymermaterial zur Registrierung von Fingerabdrücken
Kit comprenant un matériau polymère transparent pour l'enregistrement de traces de doigt

(43) Date of publication of application: 23.08.2006
(73) Proprietor: Coltène/Whaledent AG, 9450 Altstaetten (CH)
(72) Inventor: Lübbers Dierk, Dr., 9450 Altstätten (CH); Kollefrath Ralf, Dr., 9464 Rüthi (CH); Lampl Stephan, 9450 Lüchingen (CH)
(74) Representative: Hepp Wenger Ryffel AG

(56) References cited:
- EP-A- 1 288 871
- US-A- 4 228 065
- US-A- 4 451 692
- US-A- 5 728 341
- US-A- 6 040 354
- ARROWHEAD FORENSIC PRODUCTS: "Microcast Silicone Kit"[Online] 27 October 2004 (2004-10-27), XP002336116 Retrieved from the Internet: URL:http://web.archive.org/web/20041027051 938/http://www.crime-scene.com/ecpi/5026.s html> [retrieved on 2005-07-13]

## Description

The present invention is related to clear silicone materials and the use thereof for the registration of fingerprints.

The detection of fingerprints is a very important tool for criminal investigations. Fingerprints are a characteristic feature of an individual person. It is considered as strong evidence if the fingerprints found at a location where a crime had occurred coincide with the fingerprints of a person suspected to have performed the crime.

Conventionally, fingerprints are detected and collected by first applying a powder such as carbon black or aluminum on the surface of an object to be investigated. By sweeping the surface with a brush it is achieved that the powder adheres to latent fingerprints, if there are any. The fingerprints thus made visible (developed) can be lifted by using adhesive tapes.

If objects having a difficult surface, such as a porous, curved, fragile or textured surface, are to be investigated, the use of adhesive tapes is not possible. For the investigation of such objects, colored polymeric masses have been used. Those polymeric masses are cast on the surface of the object, after fingerprints on said object have been made visible by applying the above-mentioned powders. The polymeric mass is applied onto the developed fingerprint and allowed to cure. The cured polymeric mass is subsequently taken off the surface. Such polymeric masses have also been used for the registration of tool marks, i.e. the traces caused by tools used for e.g. the burglary. Commercial products are, for example, Mikrosil® or Microcast® or Coltene® Transfer.

Conventionally, these masses are fast-curing silicone-based polymers. The polymers are mixed, immediately prior to application, with a catalyst, applied onto the developed fingerprint and then allowed to cure. Curing takes several minutes. Depending on the powder which has been used for developing the fingerprint, a mass having a color which provides a maximum contrast with the powder is used. For example, when black powders such as carbon black is used as developing agent, white polymeric masses are preferred, whereas when a silver powder is used, a black polymeric mass is preferred.

The fingerprint impression which can be collected by means of those masses is reversed ("negative") as compared to the original ("positive") fingerprint. This leads to increasing problems in several jurisdictions, which tend to accept only "positive" fingerprint reproductions.

It was therefore the object of the present invention to provide a possibility of obtaining positive fingerprint reproductions from difficult (e.g. curved or uneven) surfaces.

This object has been solved by a kit comprising a clear silicone mass, a suitable crosslinking agent and a developing agent; and a process of collecting fingerprints by using the kit.

The present invention is based on the surprising finding that it is possible to collect a fingerprint by using a clear polymeric mass, and to obtain the positive fingerprint by taking a photograph of the collected (negative) fingerprint through said clear polymeric mass from the upper side, i.e. from the side remote from the fingerprint impression.

Thus, the present invention is particularly related to a clear crosslinkable polymeric mass selected from the group consisting of silicone polymers, polyurethane polymers, polyether polymers, polyacrylates, styrene-butadiene-copolymers, and methyl methacrylate copolymers, wherein said mass has a viscosity of from 0.1 to 200 Pas and a tensile strength of from 0.1 to 5 MPa.

It is necessary for the polymer to have an appropriate viscosity, preferably in the above-defined range. Otherwise it is not possible to obtain an adequate impression of a fingerprint by applying said polymeric mass onto the developed fingerprint. The mass would be either to fluent and flow over the surface without taking up the fingerprint impression, or it would be too viscous already before curing and thus also not capable of taking up the fingerprint impression. According to the present invention, it is preferred that the polymeric mass to be used has a viscosity in the range of from 0.1 to 200 Pas, especially preferred from 1 to 50 Pas.

The polymeric mass must result in a cured layer which allows the taking of a photography through the layer. Thus, the mass must be clear. According to the present invention, the term clear means that the cured layer is sufficiently transparent that a photograph showing the details of the fingerprint impression contained in said layer can be taken through said layer. In other words, it must be possible to obtain from the polymeric mass a cured layer having a thickness not exceeding 5 mm. Since with increasing thickness the brilliance of the photography taken through said layer decreases as well as the danger of inclusions of air increases, it is preferred to have a thickness of the cured layer which does not exceed 1 mm, preferably not exceed 0.5 mm and most preferably is less than 0.4 mm.

In order to be able to obtain cured layers with the required thickness, the polymeric mass has to possess an appropriate tensile strength, preferably a tensile strength of at least 0.1 MPa, preferably of more than 1 MPa, and most preferably of 1.5 MPa.

The polymeric mass which can be used according to the present invention is further limited by the requirement that a clear cured layer has to be obtained, in order to allow the taking of photographies through said layer. According to a preferred embodiment of the present invention, the clear mass may be either a crosslinkable silicone polymer, a crosslinkable polyurethane polymer, a crosslinkable polyether polymer, a crosslinkable polyacrylate, a crosslinkable styrene-butadiene-copolymer, or a methyl methacrylate copolymer. The term "crosslinkable" in this respect means that the polymer must comprise functional groups which can react with a crosslinking agent. By means of said reaction, the crosslinking agent can link two or more of the polymer chains, resulting in a three-dimensional network. By means of said crosslinking reaction, a cured layer is obtained from the polymeric mass.

Silicone polymers are from a chemical standpoint polysiloxanes having the general formula

X- ( (R¹R²) Si-O) ₙ- (R¹R²) Si-Y

with R¹ and R² being organic residues equal or different from each other, preferably a C₁₋₁₀ alkyl group, and X und Y being terminal groups. R¹ and R² may also comprise functional groups, preferably vinyl groups. n can be an integer from 1 to 10000.

According to the present invention, it is preferred to use linear silicone polymers comprising terminal groups X and Y at least one of which comprising a functional group capable of reacting with a crosslinking agent. It is preferable to use a silicone polymer which can be either addition-crosslinked or condensation-crosslinked.

The term "addition-crosslinked" or "addition-crosslinkable" means that the polymer comprises at least one functional group which may react with a crosslinking agent via an addition reaction. A typical example is that the polymer comprises at least one double bond, preferably two double bonds, which may undergo an electrophilic addition reaction with an appropriate crosslinking agent. A preferred embodiment according to the present invention is a silicone polymer which comprises terminal groups X and Y possessing double bonds, for example vinyl groups. An example is the commercial product Silopren U1, a vinyl-terminated polydimethylsiloxane sold by GE Bayer Silicones.

The term "condensation-crosslinked" or "condensation-crosslinkable" means that the polymer comprises at least one functional group which may react with a crosslinking agent via a condensation reaction. A typical example is that the polymer comprises at least one hydroxyl group, preferably two hydroxyl groups, which may undergo a condensation reaction with an appropriate crosslinking agent, for example a crosslinking agent comprising alkoxy silicates. A preferred embodiment according to the present invention is a silicone polymer which comprises as terminal groups X and/or Y hydroxyl groups. An example is the commercial product Silopren C2, a hydroxy-terminated polydimethylsiloxane sold by GE Bayer Silicones.

According to the present invention, the molecular weight of the silicone polymer is chosen such that the required viscosity and tensile strength are obtained. Optionally, additives such as rheology modifiers may be added for adjustment of said parameters.

Polyurethanes are polymers which are obtainable by reaction of a polyisocyanate, preferably a diisocyanate, with a polyol, such as a polyether polyol or polyester polyol. As to the presence of functional groups which render the polymer crosslinkable, as well as to the molecular weight of the polymer, the above statements with respect to silicone polymers equally apply.

Polyethers are polymers comprising ether groups in their repeating unit. Polyether prepolymers may be obtained, for example, from epoxides. As to the presence of functional groups which render the polymer crosslinkable (e.g. aziridine groups), as well as to the molecular weight of the polymer, the above statements with respect to silicone polymers equally apply.

Polyacrylates are polymers which are obtained by polymerization of acrylate monomers, such as methyl methacrylates (MMA). As to the presence of functional groups which render the polymer crosslinkable, as well as to the molecular weight of the polymer, the above statements with respect to silicone polymers equally apply.

Styrene-butadiene-copolymers may be obtained by copolymerization of these monomers. As to the presence of functional groups which render the polymer crosslinkable, as well as to the molecular weight of the polymer, the above statements with respect to silicone polymers equally apply.

Methyl methacrylates-copolymers may be obtained by co-polymerizing methyl methacrylates with a suitable monomer. As to the presence of functional groups which render the polymer crosslinkable, as well as to the molecular weight of the polymer, the above statements with respect to silicone polymers equally apply.

The above polymers as well as the details of their synthesis are well-known to the skilled man and need not be described here.

The above polymers may be additionally mixed with conventional additives, such as rheology modifiers, fillers etc., which are well-known to the skilled man and used for adjusting the properties of the polymers. Examples of such additives are highly-dispersed silica, paraffin oil, surfactants, fillers, and pre-polymeric resins such as silicone resins.

The above polymeric mass is used according to the present invention with an appropriate crosslinker capable of reacting with the polymer. The reaction between the polymer and the crosslinker causes the curing of the layer applied onto the developed fingerprint. The nature of the crosslinker to be used depends upon the kind of polymer, i.e. which functional groups are present in the polymer.

For example, in the case of the above-mentioned addition-crosslinkable silicone polymer, an appropriate crosslinker is a reagent capable of reacting with said polymer via an addition reaction. According to a preferred embodiment of the present invention, the polymeric mass is the commercial product Silopren U1, a vinyl-terminated polydimethylsiloxane sold by GE Bayer Silicones. This polymer may be used, for example, together with the commercially available crosslinking agent Silopren U crosslinker 430 sold by GE Bayer Silicones, which is a polydimethyl hydrogen methyl siloxane comprising Si-H bonds. Said Si-H bonds may react with the vinyl groups in the Silopren U1.

In the case of the above-mentioned condensation-crosslinkable silicone polymer, an appropriate crosslinker is a reagent capable of reacting with said polymer via a condensation reaction. According to a preferred embodiment of the present invention, the polymeric mass is the commercial product Silopren C2, a hydroxy-terminated polydimethylsiloxane sold by GE Bayer Silicones. This polymer may be used, for example, together with the commercially available crosslinking agent Silopren C crosslinker 25 sold by GE Bayer Silicones, which is a mixture of alkoxy silicates and organotin compounds.

The reaction between the polymer and the crosslinking agent is typically accelerated by the use of a catalyst. Catalysts for the respective reactions are well-known. For example, for the above addition-crosslinkable silicone polymer, a suitable catalyst is the Silopren catalyst Pt/D sold by GE Bayer Silicones, which is a platinum complex in divinyl polymethylsiloxane.

Thus, the present invention is related to a kit for the registration of fingerprints, comprising a clear polymer, preferably as described above, and a suitable crosslinking agent. Optionally, the kit may comprise a suitable catalyst. Furthermore, the kit comprises a developing agent.

According to the present invention, the kit may be one-component or two-component kit. A one-component kit is a system where the polymeric mass and the crosslinker are stored together in e.g. the same compartment, but will only undergo the crosslinking reaction after being released and brought in contact with air humidity. A two-component kit is a kit where the polymeric mass and the crosslinker are stored separately, e.g. in different compartments.

In said kit, the polymer may also be present dissolved in a suitable solvent.

According to a preferred embodiment of the present invention, the kit comprises Silopren U1 as polymeric mass, Silopren U Crosslinker as suitable crosslinker capable of undergoing an addition reaction with Silopren U1, and Silopren U catalyst as a suitable catalyst,

According to another preferred embodiment of the present invention, the kit comprises Silopren C2 as polymeric mass, and Silopren U Crosslinker 25 as suitable crosslinker capable of undergoing a condensation reaction with said polymer.

The amounts of the components to be used are easily determined by a skilled man on a routine basis and adjusted to his personal needs. A typical ratio of polymeric mass to crosslinker according to the present invention is 1:1 to 100:1. Catalysts are typically used in low amounts, i.e. amounts sufficient for obtaining the desired curing times but still not constituting a significant impurity.

Typical total amounts for all of the components to be used according the present invention lie in a range of from 1 to 20 g, preferably 3 to 10 g.

The developing agent used in the kit of the present invention may be any developing agent conventionally used in the art of developing fingerprints. Examples are powders such as carbon black, aluminum powder, or magnetic or fluorescent powders.

The present invention is furthermore related to a process for the registration of fingerprints, comprising the steps of
a) developing a fingerprint on a surface;
b) mixing a clear polymer with a suitable crosslinker, optionally in the presence of a suitable catalyst;
c) immediately applying the mixture obtained in step b) onto the developed fingerprint and allowing said mixture to form a cured clear layer; and
d) lifting the cured layer obtained in step c) and comprising an impression of said fingerprint off of said surface.

According to the present invention, the development of a fingerprint may be carried as conventionally performed in the art. Thus, a developing agent such as, for example, carbon black powder, is distributed over the surface to be examined for the presence of fingerprints. Subsequently, the surface to be examined is swept with a brush so that the developing agent adheres to any present latent fingerprint, which in this way becomes developed, i.e. visible.

The clear crosslinkable polymeric mass is mixed with a suitable crosslinker, optionally in the presence of a catalyst. Preferably, the components are put on a separate object, such as a piece of paper, and thoroughly mixed, e.g. by using a stick. The mixing of the components may be performed by hand-mixing. It is also possible to perform automatic mixing using a conventional cartridge system with a static mixer.

Immediately thereafter, the mixture thus obtained is applied on the developed fingerprint. This has to be done quickly since curing of the mixture starts instantaneously. The mixture may be cast onto the developed fingerprint. Alternately, it may be scraped off the object where admixture has been performed, for example by using a stick, and then placed on the developed fingerprint. Optionally and if necessary, the applied layer consisting of said mixture may be smoothened, e.g. by using a plastic foil.

Once put onto the developed fingerprint, the mixture is allowed to cure. Typical curing times according to the present invention are several minutes, for example 3 to 10 minutes, preferably 4 to 6 minutes, under standard environmental conditions (23°C). Of course, curing times depend on the environmental conditions and may be shorter at elevated temperatures or longer at low temperatures.

The mixture is applied onto the fingerprint in such an amount that a cured clear layer is formed having a thickness not exceeding 5 mm. Thicker layers significantly deteriorate or even completely prevent the taking of photographs through said cured clear layer. Since with increasing thickness the brilliance of the photography taken through said layer decreases as well as the danger of inclusions of air increases, it is preferred to have a thickness of the cured layer which does not exceed 1 mm, preferably not exceed 0.5 mm and most preferably is less than 0.4 mm.

After the layer has cured, the thus formed clear cured layer may be lifted off of the surface comprising the original fingerprint. The clear cured layer contains a negative impression of the original fingerprint, which however is otherwise identical to the original fingerprint.

It is now possible to take a photograph of said fingerprint impression contained in said cured layer from the upper side of said layer, i.e. from the side remote from said impression. According to the present invention, any device for taking photographies which is conventionally used in the art is suitable for that purpose. If desired, the clear cured layer may be put on a white or colored surface, for example a piece of white paper, for the taking of the photograph.

Since the photograph is taken from the upper side of said cured layer, the image of the fingerprint becomes once again reversed, resulting in a "positive" fingerprint reproduction. It is the achievement of the present invention to provide, for the first time, a polymeric mass and a process employing said mass which allow said "positive" fingerprint reproduction.

According to the present invention, in principle any polymeric mass which forms a clear layer having the required physical parameters such as thickness, viscosity and tensile strength may be used in the above process. It is preferred that the cured layer may be formed from a polymeric mass selected from the group consisting of silicone polymers, polyurethane polymers, polyether polymers, polyacrylates, styrene-butadiene-copolymers, and methyl methacrylate copolymers. It is especially preferred that the cured layer may be formed from the above-described polymeric masses and kits.

Thus, the present invention teaches the use of a clear crosslinkable polymeric mass for the registration of fingerprints. It is preferred that the cured layer may be formed from a polymeric mass selected from the group consisting of silicone polymers, polyurethane polymers, polyether polymers, polyacrylates, styrene-butadiene-copolymers, and methyl methacrylate copolymers. It is especially preferred that the cured layer may be formed from the above-described polymeric masses and kits.

The main application for the polymeric masses and kits according to the present invention is the registration of fingerprints. However, the masses and kits may also be used for the registration of other traces, such as for example traces made by a pencil.

It is also possible, by means of the masses and kits according to the present invention, to register fingerprints from the surface of a paper or a sucking material.

The present invention is further illustrated by non-limiting examples and drawings.

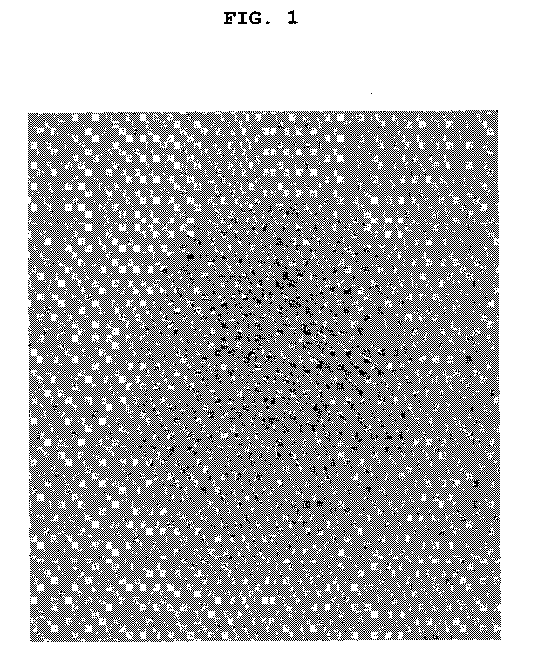

FIG. 1 shows a photograph of a fingerprint taken through a clear cured layer according to the present invention.

### Example 1:

A clear cured layer according to the present invention was prepared as follows on the basis of an addition-crosslinkable silicone polymer:

| | | |
|---|---|---|
| Component A: | 99.9 g | Silopren U1 |
| | 0.1 g | Silopren U Catalyst Pt/D |
| Component B: | 90.0 g | Silopren U1 |
| | 10.0 g | Silopren U Crosslinker 430 |

The chemical nature of these components has been described above.

The components A and B were thoroughly mixed with each other on a piece of paper and immediately applied onto a glass plate, on which a fingerprint was created and developed using carbon black as developing agent.

The mixture was put onto the glass plate using a plastic foil, so that a layer having a thickness of 0.35 mm was obtained. The layer was allowed to cure for about 5 minutes.

The cured layer was lifted off of the glass plate. A photograph was taken through said layer from the upper side, resulting in a photograph showing the positive impression of the fingerprint. The photograph is shown in Fig. 1. No further processing of the photograph was carried out.

### Example 2:

A clear cured layer according to the present invention was prepared as follows on the basis of a condensation-crosslinkable silicone polymer:

| | | |
|---|---|---|
| Component A: | 1.0 g | Silopren C Crosslinker 25 |
| Component B: | 99.0 g | Silopren C2 |

The chemical nature of these components has been described above.

A clear cured layer comprising a fingerprint impression was generated as described above in Example 1.

## Claims

1. Kit for taking fingerprints, comprising a clear crosslinkable polymeric mass and a suitable crosslinking agent and a developing agent.

2. Kit according to Claim 1, with the clear crosslinkable polymeric mass selected from the group consisting of silicone polymers, polyurethane polymers, polyether polymers, polyacrylates, styrene-butadiene-copolymers, and methyl methacrylate copolymers.

3. Kit according to claim 1, wherein said mass is an addition-crosslinkable silicone polymer.

4. Kit according to claim 1, wherein said mass is a condensation-crosslinkable silicone polymer.

5. Kit according to claim 1, further comprising one or more additives.

6. Kit according to claim 1, further comprising a suitable catalyst.

7. Kit according to one of claims 1 to 6, the developing agent being a powder, preferably a selected from the group consisting of carbon black, aluminum powder, magnetic powder, fluorescent powder.

8. Kit according to one of claims 1 to 7, wherein the polymeric mass and the crosslinking agent are stored together in the same compartment.

9. Kit according one of claims 1 to 7, wherein the polymeric mass and the crosslinking agent are stored separately in different compartments.

10. Process for the registration of fingerprints, comprising the steps of
a) developing a fingerprint on a surface;
b) mixing a clear crosslinkable polymeric mass with a suitable crosslinker, optionally in the presence of a suitable catalyst;
c) immediately applying the mixture obtained in step b) onto the developed fingerprint and allowing said mixture to form a cured clear layer;
d) lifting the cured layer obtained in step c) and comprising an impression of said fingerprint off of said surface.

11. Process according to claim 10, further comprising the step of taking a photograph through said lifted cured layer obtained in step d) from the upper side.

12. Process according to claim 10, wherein said clear crosslinkable polymeric mass polymeric mass is selected from the group consisting of silicone polymers, polyurethane polymers, polyether polymers, polyacrylates, styrene-butadiene-copolymers, and methyl methacrylate copolymers.

13. Process according to claim 10, wherein the cured layer obtained in step d) has a thickness not exceeding 5 mm.

14. Process according to claim 13, wherein said cured layer has a thickness of less than 0.4 mm.

15. Clear cured layer comprising a fingerprint impression, obtained by the process of claim 10.

16. Clear cured layer according to claim 15, having a thickness not exceeding 5 mm.

17. clear cured layer according to claim 16, having a thickness not exceeding 0.4 mm.

## Patentansprüche

1. Kit zum Nehmen von Fingerabdrücken, umfassend eine klare, vernetzbare Polymermasse und ein geeignetes Vernetzungsmittel und ein Entwicklungsmittel.

2. Kit gemäß Anspruch 1, wobei die klare, vernetzbare Polymermasse ausgewählt ist aus der Gruppe bestehend aus Siliconpolymeren, Polyurethanpolymeren, Polyetherpolymeren, Polyacrylaten, Styrol-Butadien-Copolymeren und Methylmethacrylat-Copolymeren.

3. Kit gemäß Anspruch 1, wobei die Masse ein additionsvernetzbares Siliconpolymer ist.

4. Kit gemäß Anspruch 1, wobei die Masse ein kondensationsvernetzbares Siliconpolymer ist.

5. Kit gemäß Anspruch 1, ferner umfassend einen oder mehrere Zusatzstoffe.

6. Kit gemäß Anspruch 1, ferner umfassend einen geeigneten Katalysator.

7. Kit gemäß einem der Ansprüche 1 bis 6, wobei das Entwicklungsmittel ein Pulver ist, vorzugsweise ausgewählt aus der Gruppe bestehend aus Ruß, Aluminiumpulver, magnetischem Pulver, fluoreszierendem Pulver.

8. Kit gemäß einem der Ansprüche 1 bis 7, wobei die Polymermasse und das Vernetzungsmittel in dem gleichen Kompartiment gemeinsam aufbewahrt werden.

9. Kit gemäß einem der Ansprüche 1 bis 7, wobei die Polymermasse und das Vernetzungsmittel getrennt in verschiedenen Kompartimenten aufbewahrt werden.

10. Verfahren zur Erfassung von Fingerabdrücken, umfassend die Schritte
a) Entwickeln eines Fingerabdrucks auf einer Oberfläche;
b) Mischen einer klaren, vernetzbaren Polymermasse mit einem geeigneten Vernetzer, gegebenenfalls in Gegenwart eines geeigneten Katalysators;
c) sofortiges Aufbringen des in Schritt b) erhaltenen Gemischs auf den entwickelten Fingerabdruck und Erlauben, dass das Gemisch eine gehärtete, klare Schicht bildet;
d) Abheben der in Schritt c) erhaltenen, einen Abdruck des Fingerabdrucks umfassenden gehärteten Schicht von der Oberfläche.

11. Verfahren gemäß Anspruch 10, ferner umfassend den Schritt des Nehmens einer photographischen Aufnahme von der Oberseite durch die in Schritt d) erhaltene abgehobene gehärtete Schicht.

12. Verfahren gemäß Anspruch 10, wobei die klare, vernetzbare Polymermasse ausgewählt ist aus der Gruppe bestehend aus Siliconpolymeren, Polyurethanpolymeren, Polyetherpolymeren, Polyacrylaten, Styrol-Butadien-Copolymeren und Methylmethacrylat-Copolymeren.

13. Verfahren gemäß Anspruch 10, wobei die in Schritt d) erhaltene gehärtete Schicht eine Dicke von nicht über 5 mm aufweist.

14. Verfahren gemäß Anspruch 13, wobei gehärtete Schicht eine Dicke von weniger als 0,4 mm aufweist.

15. Klare, gehärtete Schicht, umfassend einen Fingerabdruck-Abdruck, erhalten durch das Verfahren gemäß Anspruch 10.

16. Klare, gehärtete Schicht gemäß Anspruch 15 mit einer Dicke von nicht über 5 mm.

17. Klare, gehärtete Schicht gemäß Anspruch 16 mit einer Dicke von nicht über 0,4 mm.

## Revendications

1. Kit de relevé d'empreintes digitales, comprenant une masse polymère réticulable transparente, et un agent de réticulation convenable et un agent de développement.

2. Kit selon la revendication 1, la masse polymère réticulable transparente étant choisie dans le groupe constitué par les polymères de silicone, les polymères de polyuréthane, les polymères de polyéther, les polyacrylates, les copolymères de styrène-butadiène, et les copolymères de méthacrylate de méthyle.

3. Kit selon la revendication 1, dans lequel ladite masse est un polymère de silicone réticulable par addition.

4. Kit selon la revendication 1, dans lequel ladite masse est un polymère de silicone réticulable par condensation.

5. Kit selon la revendication 1, comprenant en outre un ou plusieurs additifs.

6. Kit selon la revendication 1, comprenant en outre un catalyseur convenable.

7. Kit selon l'une des revendications 1 à 6, l'agent de développement étant une poudre, choisie de préférence dans le groupe constitué par le noir de carbone, une poudre d'aluminium, une poudre magnétique, une poudre fluorescente.

8. Kit selon l'une des revendications 1 à 7, dans lequel la masse polymère et l'agent de réticulation sont stockés ensemble dans le même compartiment.

9. Kit selon l'une des revendications 1 à 7, dans lequel la masse polymère et l'agent de réticulation sont stockés séparément dans des compartiments différents.

10. Procédé pour l'enregistrement d'empreintes digitales, comprenant les étapes consistant à :
a) développer une empreinte digitale sur une surface ;
b) mélanger une masse polymère réticulable transparente avec un agent de réticulation convenable, éventuellement en présence d'un catalyseur convenable ;
c) appliquer immédiatement le mélange obtenu dans l'étape b) sur l'empreinte digitale développée et laisser ledit mélange former une couche transparente durcie ;
d) décoller de ladite surface la couche durcie obtenue dans l'étape c) et comprenant une impression de ladite empreinte digitale.

11. Procédé selon la revendication 10, comprenant eu outre l'étape de prise d'une photographie à travers ladite couche durcie décollée obtenue dans l'étape d) à partir du côté supérieur.

12. Procédé selon la revendication 10, dans lequel ladite masse polymère réticulable transparente est choisie dans le groupe constitué par les polymères de silicone, les polymères de polyuréthane, les polymères de polyéther, les polyacrylates, les copolymères de styrène-butadiène, et les copolymères de méthacrylate de méthyle.

13. Procédé selon la revendication 10, dans lequel la couche durcie obtenue dans l'étape d) possède une épaisseur non supérieure à 5 mm.

14. Procédé selon la revendication 13, dans lequel ladite couche durcie possède une épaisseur inférieure à 0,4 mm.

15. Couche durcie transparente comprenant une impression d'empreinte digitale, obtenue par le procédé selon la revendication 10.

16. Couche durcie transparente selon la revendication 15, ayant une épaisseur non supérieure à 5 mm.

17. Couche durcie transparente selon la revendication 16, ayant une épaisseur non supérieure à 0,4 mm.
